# EUROPEAN PATENT SPECIFICATION

(11) **EP 3 875 318 B1**
(45) Date of publication and mention of the grant of the patent: **29.06.2022**
(21) Application number: 21159922.0
(22) Date of filing: 01.03.2021
(51) Int. Cl.: B60R 16/023, H02G 3/08, H02G 3/14

(54) **ELECTRICAL CONNECTION BOX**
ELEKTRISCHE ANSCHLUSSDOSE
BOÎTIER DE CONNEXION ÉLECTRIQUE

(30) Priority: 05.03.2020 JP 2020037850
(43) Date of publication of application: 08.09.2021
(73) Proprietor: Yazaki Corporation, Minato-ku Tokyo 108-8333 (JP); Toyota Motor Kyushu, Inc., Miyawaka City, Fukuoka Prefecture 823-0015 (JP); TOYOTA JIDOSHA KABUSHIKI KAISHA, Toyota-shi Aichi-ken, 471-8571 (JP)
(72) Inventor: NAKACHI, Yusuke, Miyawaka City, Fukuoka Prefecture 823-0015 (JP); KUBO, Yasutomo, Miyawaka City, Fakuoka Prefecture 823-0015 (JP); MURAO, Yasuaki, Miyawaka City, Fukuoka Prefecture 823-0015 (JP); SUZUKI, Hodumi, Makinohara-shi, Shizuoka 421-0407 (JP); WADA, Masahiro, Makinohara-shi, Shizuoka 421-0407 (JP); KAWADA, Daisuke, Makinohara-shi, Shizuoka 421-0407 (JP); SHOJI, Kazuki, Makinohara-shi, Shizuoka 421-0407 (JP)
(74) Representative: Grünecker Patent- und Rechtsanwälte PartG mbB

(56) References cited:
- US-A1- 2019 379 193

## Description

### BACKGROUND OF THE INVENTION

### 1. Field of the Invention

The present invention relates to an electrical connection box.

### 2. Description of the Related Art

US 2019/379193 A1 discloses an electrical connection box according to the preamble of claim 1. In addition, conventionally, there is an electrical connection box that includes a box main body and a cover. Japanese Patent Application Laid-open No. 2014-155362 discloses an electrical connection box including a frame and a cover attached to the frame, in which a lock receiving part is provided at both ends of the frame, a lock part is provided at both ends of the cover, and the lock parts are engaged with the lock receiving parts by pressing the cover to the frame side. As for the electrical connection box of Japanese Patent Application Laid-open No. 2014-155362, it is described that the cover can be easily attached to the frame with one hand. Japanese Patent Application Laid-open No. 2001-77551 discloses an electrical connection box with which an upper case can be removed with one hand even it is of a large scale. Japanese Patent Application Laid-open No. 2000-236611 discloses an electrical connection box that includes: a groove formed on a sidewall of a main body side thereof for allowing a wiring such as a wire harness or a cable to pass through; and a cover member formed in an upper cover to cover the groove.

In regards to achieving a better operability when removing the cover, there is still room for improvement. For example, the operability can be improved if removal of the cover including release of the lock can be done with one hand at once.

### SUMMARY OF THE INVENTION

An object of the present invention is to provide an electrical connection box with which the operability when removing its cover can be improved.

In order to achieve the above mentioned object, an electrical connection box according to claim 1 is provided. According to one aspect of the present disclosure an electrical connection box includes a box main body including a cylindrical sidewall that surrounds a housing space for accommodating an electronic component, and a locking part disposed on an outer face of the sidewall; and a cover that is fitted to one end of the sidewall and closes an opening of the sidewall, wherein the sidewall includes a first wall part, and a second wall part opposite the first wall part in a first direction, the locking part includes a first locking part disposed on the first wall part, and a second locking part disposed on the second wall part, the cover includes a first opposing wall opposite the first wall part, a flexible first lock piece that is disposed on an outer face of the first opposing wall and locked by the first locking part, a second opposing wall opposite the second wall part, and a flexible second lock piece that is disposed on an outer face of the second opposing wall and locked by the second locking part, the first opposing wall includes a first opposing part, a second opposing part, and a connection part that connects the first opposing part and the second opposing part, the first opposing part and the second opposing part extend along a second direction that is orthogonal to the first direction, and also neighboring to each other in the second direction, the second opposing part is located closer to the second opposing wall side than the first opposing part is, the first lock piece is located at an end part of the first opposing part close to the second opposing part, the first lock piece is configured such that engagement with the first locking part is released by being pressed toward a side of the second opposing wall, and the second lock piece is configured such that engagement with the second locking part is released by being pressed toward a side of the first opposing wall.

According to another aspect of the present invention, in the electrical connection box, it is preferable that the connection part is a tilted face that is tilted with respect to the first direction.

According to still another aspect of the present invention, in the electrical connection box, it is preferable that the second lock piece is disposed on the second opposing wall at a position opposite the first opposing part in the first direction.

According to still another aspect of the present invention, in the electrical connection box, it is preferable that the first lock piece is located between the second lock piece and the connection part in the second direction.

According to still another aspect of the present invention, in the electrical connection box, it is preferable that the first opposing wall includes protection walls that are disposed on both sides of the first lock piece in the second direction and configured to protect the first lock piece, and the second opposing wall includes protection walls that are disposed on both sides of the second lock piece in the second direction and configured to protect the second lock piece.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a plan view of an electrical connection box according to an embodiment;
FIG. 2 is a perspective view of the electrical connection box according to the embodiment;
FIG. 3 is an exploded perspective view of the electrical connection box according to the embodiment;
FIG. 4 is a plan view of a box main body according to the embodiment;
FIG. 5 is a plan view of an upper cover according to the embodiment;
FIG. 6 is a sectional view of the upper cover according to the embodiment;
FIG. 7 is a perspective view of the upper cover according to the embodiment;
FIG. 8 is a plan view for describing a lock release operation according to the embodiment; and
FIG. 9 is a diagram for describing the lock release operation according to the embodiment.

### DETAILED DESCRIPTION OF THE PREFERRED EMBODIMENT

Hereinafter, an electrical connection box according to an embodiment of the present invention will be described in detail with reference to the accompanying drawings. Note that the present invention is not limited by the embodiment. Furthermore, structural elements of the embodiment described in the followings include elements that easily occurred to those skilled in the art and elements that are substantially the same.

### Embodiment

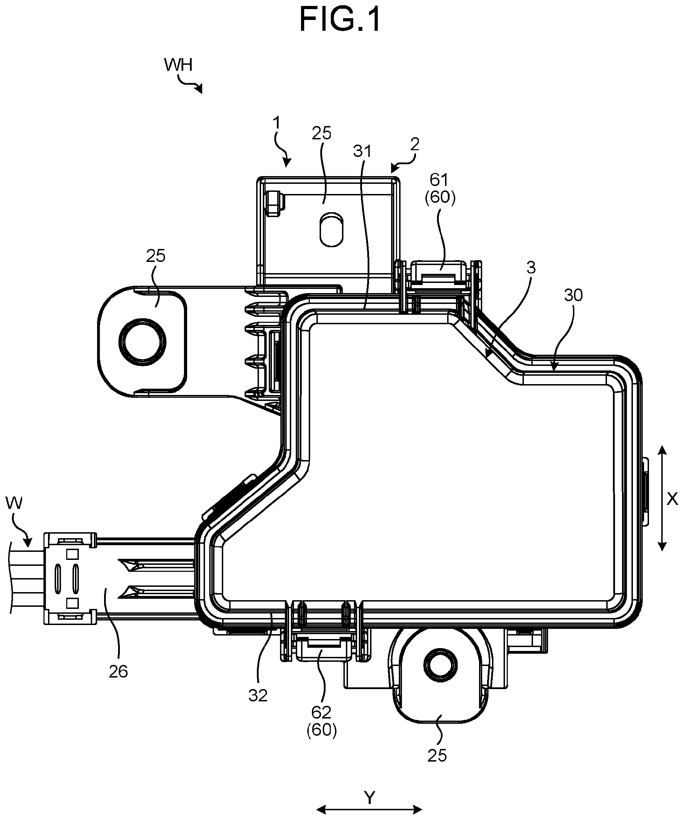

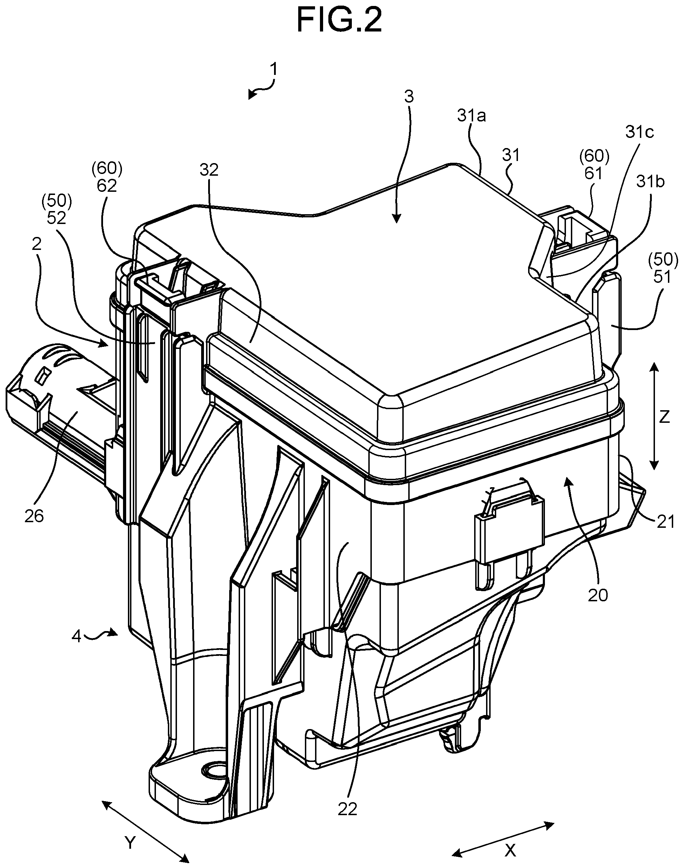

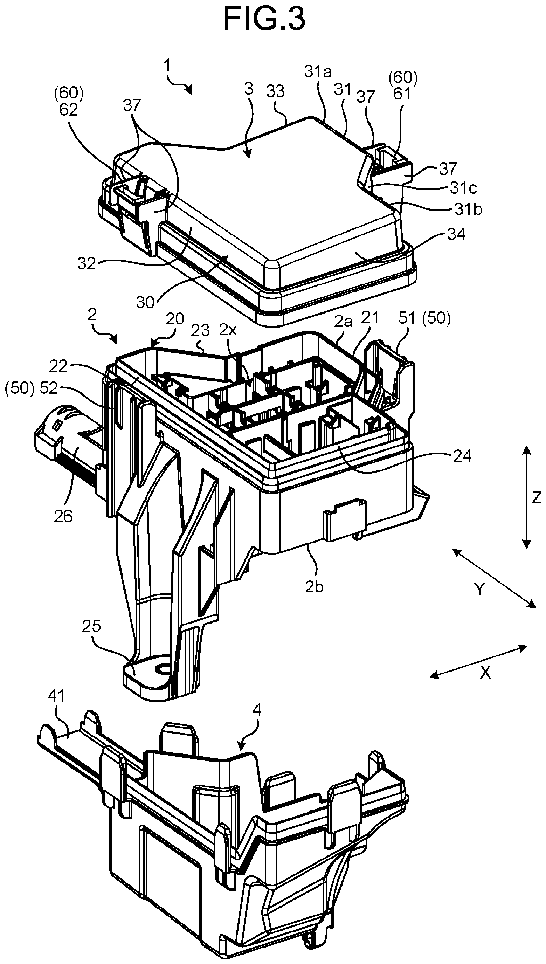

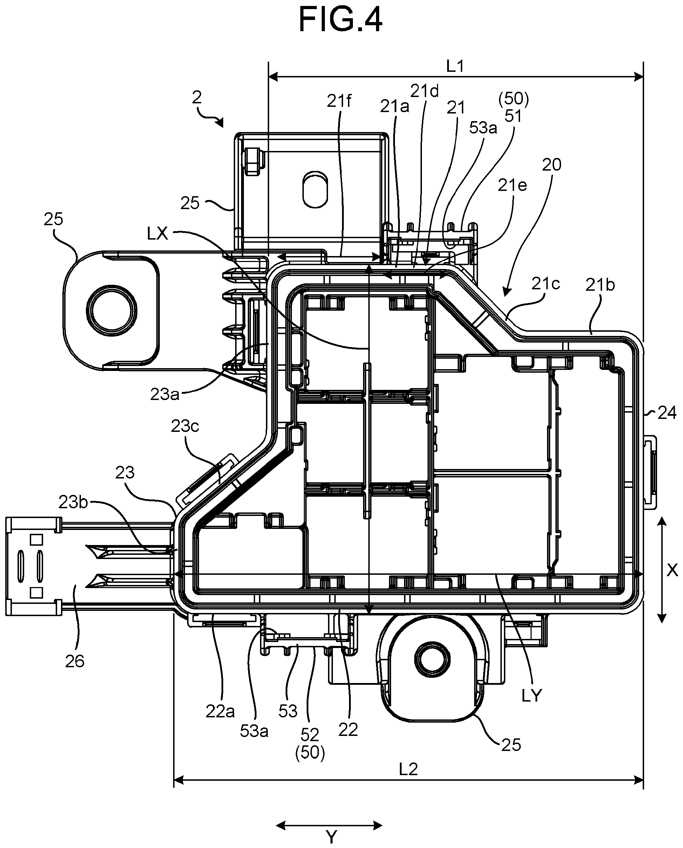

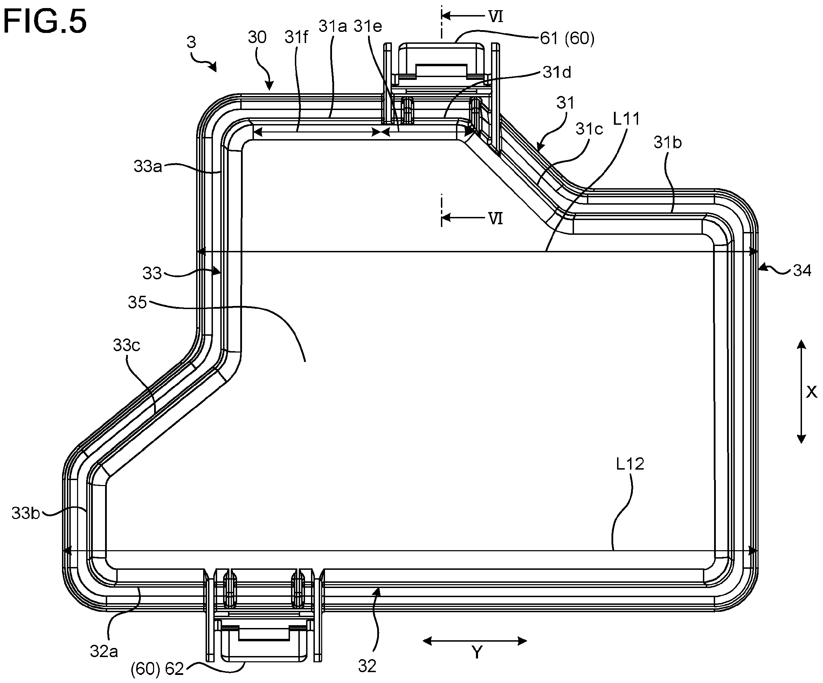

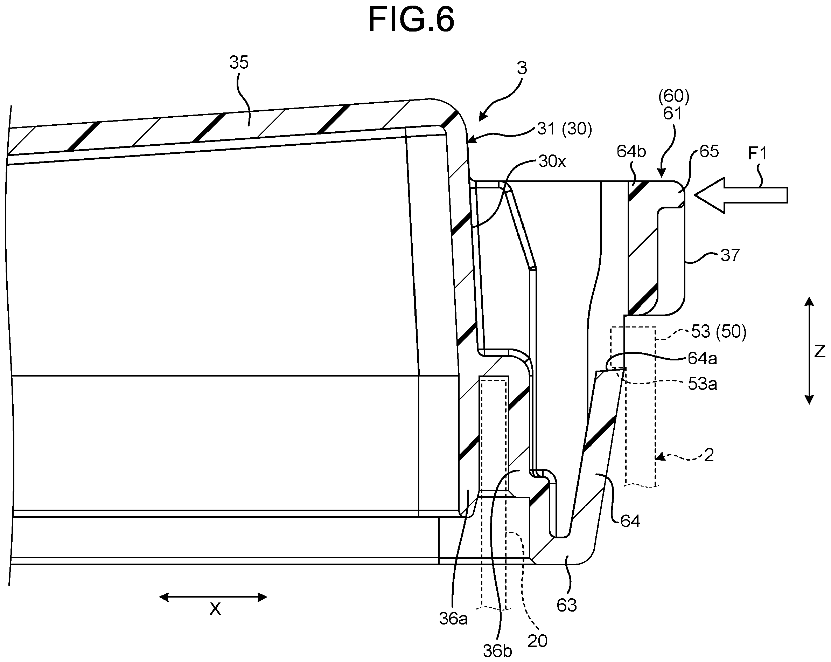

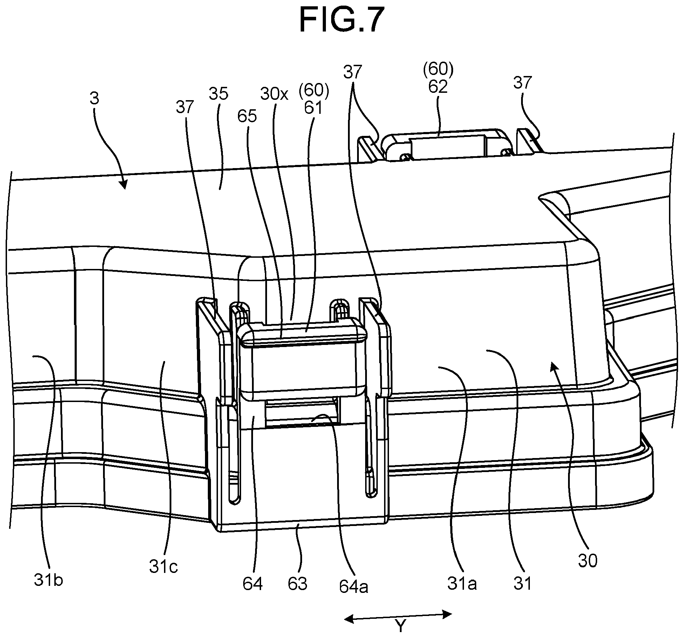

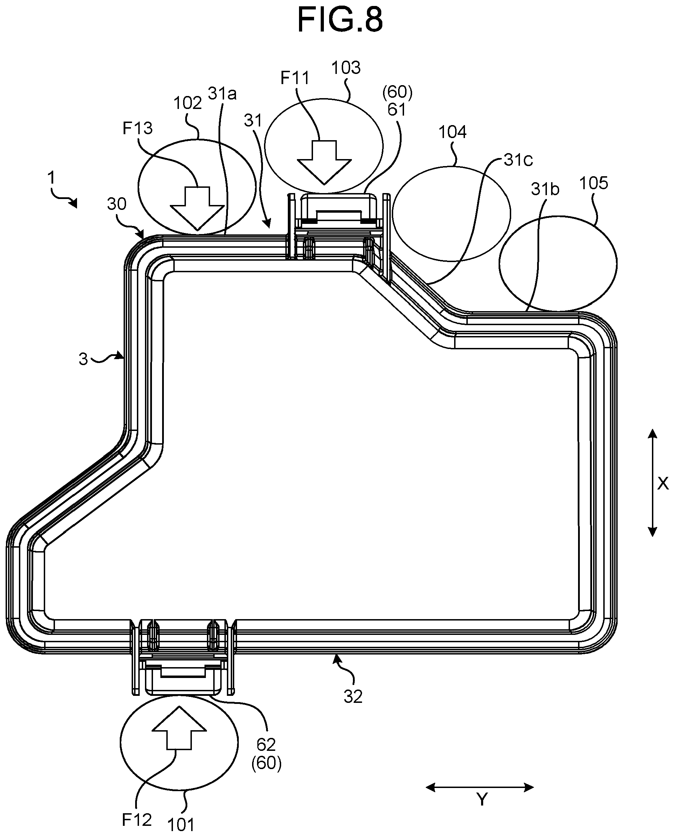

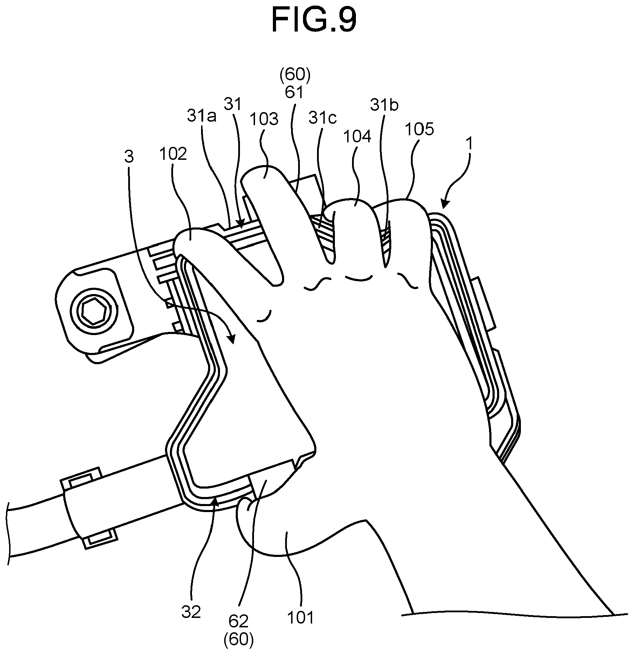

The embodiment will be described by referring to FIG. 1 to FIG. 9. The embodiment relates to the electrical connection box. FIG. 1 is a plan view of the electrical connection box according to the embodiment, FIG. 2 is a perspective view of the electrical connection box according to the embodiment, FIG. 3 is an exploded perspective view of the electrical connection box according to the embodiment, FIG. 4 is a plan view of a box main body according to the embodiment, FIG. 5 is a plan view of an upper cover according to the embodiment, FIG. 6 is a sectional view of the upper cover according to the embodiment, FIG. 7 is a perspective view of the upper cover according to the embodiment, FIG. 8 is a plan view for describing a lock release operation according to the embodiment, and FIG. 9 is a diagram for describing the lock release operation according to the embodiment.

As illustrated in FIG. 1 to FIG. 3, an electrical connection box 1 includes a box main body 2, an upper cover 3, and a lower cover 4. The electrical connection box 1 is loaded on a vehicle such as a motorcar, for example. Electronic components housed in the electrical connection box 1 are electrically connected to a storage battery and electric equipment of the vehicle via an electric wire and the like. The electrical connection box 1 may be called a junction box, a fuse box, a relay box, or the like depending on the kinds of the electronic components to be housed therein, and those are collectively referred to as "electrical connection box" in the embodiment.

As illustrated in FIG. 9, the electrical connection box 1 of the embodiment is configured such that an operator can easily release the lock and remove the upper cover 3 with one hand. Therefore, with the electrical connection box 1 of the embodiment, it is possible to improve the operability at the time of maintenance and the like of the electrical connection box 1.

The box main body 2 is the main body part of the electrical connection box 1, and a housing space 2x is provided inside thereof (see FIG. 3). The housing space 2x is the space for accommodating various kinds of electronic components and conductors. The box main body 2 is molded with an insulating synthetic resin, for example. The box main body 2 includes a sidewall 20, a locking part 50, a plurality of fixing parts 25, and an outlet part 26. The sidewall 20, the locking part 50, the fixing parts 25, and the outlet part 26 are molded integrally.

The sidewall 20 is a cylindrical part that forms the housing space 2x and surrounds the housing space 2x. The sidewall 20 is an external wall of the box main body 2, and surrounds the housing space 2x. In the following explanation, the axial direction of the sidewall 20 is referred to as "axial direction Z". Each of both ends of the sidewall 20 in the axial direction Z is opened toward the outside space. The sidewall 20 includes a first opening 2a and a second opening 2b. The first opening 2a is the opening part at one end of the sidewall 20 in the axial direction Z. The second opening 2b is the opening part at the other end of the sidewall 20 in the axial direction Z. The electrical connection box 1 is loaded on the vehicle with the first opening 2a facing upward and the second opening 2b facing downward, for example.

As illustrated in FIG. 4, the sidewall 20 includes a first wall part 21, a second wall part 22, a third wall part 23, and a fourth wall part 24. The first wall part 21 and the second wall part 22 oppose to each other in a first direction X. The third wall part 23 and the fourth wall part 24 oppose to each other in a second direction Y. The second direction Y is orthogonal to the first direction X. Furthermore, the first direction X and the second direction Y are both orthogonal to the axial direction Z. The shape of the sidewall 20 when viewed from the axial direction Z is a laterally long shape in which the maximum width LX in the first direction X is shorter than the maximum width LY in the second direction Y. In other words, as for the sidewall 20 of the embodiment, the first direction X is the short-side direction, and the second direction Y is the long-side direction.

The first wall part 21 includes a first part 21a, a second part 21b, and a connection part 21c. The first part 21a and the second part 21b both extend along the second direction Y. The first part 21a and the second part 21b may be orthogonal to the first direction X. The first part 21a and the second part 21b are neighboring to each other in the second direction Y. The second part 21b is located closer to the second wall part 22 than the first part 21a is.

The connection part 21c connects the first part 21a and the second part 21b. The connection part 21c is tilted with respect to the second direction Y. The connection part 21c is tilted to become closer to the second wall part 22 from the first part 21a toward the second part 21b along the second direction Y. As described, as for the sidewall 20 of the embodiment, the first part 21a protrudes to become distant from the second wall part 22 with respect to the second part 21b, and the connection part 21c obliquely connects the first part 21a and the second part 21b.

The second wall part 22 extends in a straight-line form along the second direction Y. The second wall part 22 may be orthogonal to the first direction X. In the second direction Y, width L2 of the second wall part 22 is wider than width L1 of the first wall part 21. An end part 22a of the second wall part 22 protrudes toward the third wall part 23 side with respect to the first wall part 21.

On the outer face of the sidewall 20, the locking part 50 is disposed. The locking part 50 is composed of a first locking part 51 and a second locking part 52. The box main body 2 locks the upper cover 3 by the first locking part 51 and the second locking part 52. The first locking part 51 is disposed on the outer face of the first wall part 21. More specifically, the first locking part 51 is disposed at an end part 21d of the first part 21a close to the second part 21b. The first part 21a includes a section 21e where the first locking part 51 is provided and a section 21f that is located closer to the third wall part 23 side than the section 21e is.

The second locking part 52 is disposed on the outer face of the second wall part 22. More specifically, the second locking part 52 is disposed in a part of the second wall part 22 opposite the first part 21a. That is, the second locking part 52 opposes to the first part 21a in the first direction X. In the box main body 2 presented as an example, the second locking part 52 is disposed by being shifted with respect to the first locking part 51 in the second direction Y. The second locking part 52 opposes to the section 21f of the first part 21a.

The locking part 50 together with the outer face of the sidewall 20 forms a space therebetween to which a lock piece 60 of the upper cover 3 is inserted. In other words, the locking part 50 protrudes in an arch like form with respect to the outer face of the sidewall 20. The locking part 50 includes a wall part 53 that opposes to the outer face of the sidewall 20.

The third wall part 23 includes a first part 23a, a second part 23b, and a connection part 23c. The first part 23a and the second part 23b extend along the first direction X. The first part 23a is connected with the first part 21a of the first wall part 21. The second part 23b is connected with the end part 22a of the second wall part 22. The connection part 23c connects the first part 23a and the second part 23b. The connection part 23c is tilted with respect to the first direction X. The connection part 23c is tilted to become distant from the fourth wall part 24 from the first part 23a toward the second part 23b along the first direction X. That is, the second part 23b protrudes to become distant from the fourth wall part 24 with respect to the first part 23a.

The fourth wall part 24 extends along the first direction X. The fourth wall part 24 presented as an example extends in a straight-line form from the joint with the first wall part 21 to the joint with the second wall part 22. The fixing part 25 is the part fixed to the body of the vehicle. The fixing part 25 is provided to each of the first wall part 21, the second wall part 22, and the third wall part 23. The outlet part 26 is the part for leading out an electric wire W from the housing space 2x toward the outside space. The outlet part 26 is formed in a semi-cylindrical shape, and protrudes from the third wall part 23 toward the second direction Y. The outlet part 26 forms a cylindrical routing path by being combined with an outlet part 41 of the lower cover 4.

The upper cover 3 is the member that is fitted to one end of the sidewall 20 to close the first opening 2a of the sidewall 20. The upper cover 3 is molded with an insulating synthetic resin, for example. The upper cover 3 includes an opposing wall 30, a top wall 35, and the lock piece 60. The opposing wall 30, the top wall 35, and the lock piece 60 are molded integrally. The upper cover 3 according to the embodiment is fixed to the box main body 2 when two lock pieces 61 and 62 are engaged with the locking part 50.

The top wall 35 is the part that opposes to the housing space 2x of the box main body 2 in the axial direction Z and closes the first opening 2a. The shape of the top wall 35 on a plan view is the shape corresponding to the shape of the first opening 2a. The opposing wall 30 is the wall part that opposes to the outer face of the sidewall 20. The opposing wall 30 is erected from the edge part of the top wall 35 toward the axial direction Z. The opposing wall 30 has a cylindrical shape and surrounds the sidewall 20 from the outer side.

The opposing wall 30 includes a first opposing wall 31, a second opposing wall 32, a third opposing wall 33, and a fourth opposing wall 34. The first opposing wall 31 and the second opposing wall 32 oppose to each other in the first direction X. The third opposing wall 33 and the fourth opposing wall 34 oppose to each other in the second direction Y.

The first opposing wall 31 is the part that opposes to the first wall part 21 of the box main body 2. The first opposing wall 31 includes a first opposing part 31a, a second opposing part 31b, and a connection part 31c. The first opposing part 31a is the part that opposes to the first part 21a of the box main body 2. The second opposing part 31b is the part that opposes to the second part 21b of the box main body 2. The connection part 31c is the part that opposes to the connection part 21c of the box main body 2. The first opposing part 31a and the second opposing part 31b both extend along the second direction Y. The first opposing part 31a and the second opposing part 31b may be orthogonal to the first direction X. The first opposing part 31a and the second opposing part 31b are neighboring to each other in the second direction Y. The second opposing part 31b is located closer to the second opposing wall 32 side than the first opposing part 31a is.

The connection part 31c connects the first opposing part 31a and the second opposing part 31b. The connection part 31c is tilted with respect to the second direction Y. The connection part 31c is tilted to become closer to the second opposing wall 32 from the first opposing part 31a toward the second opposing part 31b along the second direction Y. As described, as for the opposing wall 30 presented as an example, the first opposing part 31a protrudes to become distant from the second opposing wall 32 with respect to the second opposing part 31b, and the connection part 31c obliquely connects the first opposing part 31a and the second opposing part 31b.

The second opposing wall 32 extends in a straight-line form along the second direction Y. The second opposing wall 32 may be orthogonal to the first direction X. In the second direction Y, width L12 of the second opposing wall 32 is wider than width L11 of the first opposing wall 31. An end part 32a of the second opposing wall 32 protrudes toward the third opposing wall 33 side with respect to the first opposing wall 31.

The third opposing wall 33 includes a first part 33a, a second part 33b, and a connection part 33c. The first part 33a and the second part 33b extend along the first direction X. The first part 33a is connected with the first opposing part 31a of the first opposing wall 31. The second part 33b is connected with the end part 32a of the second opposing wall 32. The connection part 33c connects the first part 33a and the second part 33b. The connection part 33c is tilted with respect to the first direction X. The connection part 33c is tilted to become distant from the fourth opposing wall 34 from the first part 33a toward the second part 33b along the first direction X. That is, the second part 33b protrudes to become distant from the fourth opposing wall 34 with respect to the first part 33a.

The fourth opposing wall 34 extends along the first direction X. The fourth opposing wall 34 presented as an example extends in a straight-line form from the joint with the first opposing wall 31 to the joint with the second opposing wall 32.

On the opposing wall 30, the lock piece 60 is disposed. The lock piece 60 is composed of a first lock piece 61 and a second lock piece 62. The first lock piece 61 is disposed on the outer face of the first opposing wall 31. More specifically, the first lock piece 61 is disposed at an end part 31d of the first opposing part 31a close to the second opposing part 31b. The first opposing part 31a includes a section 31e where the first lock piece 61 is provided and a section 31f that is located closer to the third opposing wall 33 side than the section 31e is.

The second lock piece 62 is disposed on the outer face of the second opposing wall 32. More specifically, the second lock piece 62 is disposed in a part of the second opposing wall 32 opposing to the first opposing part 31a. That is, the second lock piece 62 opposes to the first opposing part 31a in the first direction X. In the upper cover 3 presented as an example, the second lock piece 62 is disposed by being shifted with respect to the first lock piece 61 in the second direction Y. The second lock piece 62 opposes to the section 31f of the first opposing part 31a.

The lock piece 60 exhibits flexibility, and is configured to be locked by the locking part 50 of the box main body. The lock piece 60 will be described by referring to FIG. 6 and FIG. 7. As illustrated in FIG. 6, the opposing wall 30 has a double structure in which the sidewall 20 of the box main body 2 is inserted. The tip of the opposing wall 30 is branched to an inner wall 36a and an outer wall 36b. The sidewall 20 is inserted between the inner wall 36a and the outer wall 36b.

As illustrated in FIG. 7 and the like, the opposing wall 30 includes a pair of protection walls 37 and 37 sandwiching the lock piece 60 from both sides. The protection walls 37 protrude toward the first direction from the outer face of the opposing wall 30. The protection walls 37 protect the lock piece 60 so that unintentional lock release will not occur.

The lock piece 60 includes a base part 63, an arm part 64, and an operation part 65. The base part 63 is connected with the outer wall 36b and the pair of protection walls 37, 37. The arm part 64 extends from the base part 63 along the axial direction Z. The arm part 64 opposes to an outer face 30x of the opposing wall 30 in the first direction X, and is also isolated from the outer face 30x. The arm part 64 is formed to have flexibility. The arm part 64 includes an abutting face 64a that is locked by the locking part 50. The abutting face 64a is the face that faces toward the axial direction Z, and more specifically, it is the face that faces the tip side of the arm part 64.

As illustrated in FIG. 6, a locking face 53a is provided on the wall part 53 of the locking part 50. The lock piece 60 is inserted between the sidewall 20 and the wall part 53 while flexibly deforming the arm part 64. The lock piece 60 engages with the locking part 50 when the lock piece 60 is inserted to a locking position. In an engaged state, the abutting face 64a of the lock piece 60 opposes to the locking face 53a in the axial direction Z. That is, the abutting face 64a of the lock piece 60 is locked by the locking face 53a. The locking face 53a opposes to the abutting face 64a in the axial direction Z, and regulates coming off of the lock piece 60.

The operation part 65 protrudes from a tip 64b of the arm part 64 toward the first direction X. The operation part 65 is the part to which a finger of the operator is hooked when the operator performs lock release of the lock piece 60. Because the protruding operation part 65 is provided, slip of the finger of the operator can be suppressed and the operator can easily hold the upper cover 3. When releasing the lock of the lock piece 60, the operator applies a pressing force F1 illustrated in FIG. 6 to the arm part 64. The arm part 64 is flexibly deformed to become closer to the outer face 30x by the pressing force F1, thereby releasing the lock. The operator can remove the upper cover 3 from the box main body 2 with the arm part 64 being flexibly deformed.

The lower cover 4 is the member that is fitted to the other end of the sidewall 20 and closes the second opening 2b of the sidewall 20. The lower cover 4 is molded with an insulating synthetic resin, for example. As illustrated in FIG. 3, the lower cover 4 includes the outlet part 41. The outlet part 41 forms a cylindrical routing path of the electric wire W by being combined with the outlet part 26 of the box main body 2.

As illustrated in FIG. 8, the upper cover 3 is formed such that the operator can easily perform removal work with one hand. Specifically, the operator can release the lock and hold the upper cover 3 with a thumb 101 and a middle finger 103 of the right hand. In the electrical connection box 1 according to the embodiment, the space between the first opposing wall 31 and the second opposing wall 32 in the second direction Y is set such that the operator can easily hold the upper cover 3 with one hand. By pressing the second lock piece 62 with the thumb 101 and pressing the first lock piece 61 with the middle finger 103, the operator can release the lock. The operator can hold the upper cover 3 by the pressing force F11 applied to the first lock piece 61 and the pressing force F12 applied to the second lock piece 62. That is, with the two pressing forces F11 and F12, it is possible to release the lock and to hold the upper cover 3 with one action.

Furthermore, in the electrical connection box 1 according to the embodiment, an index finger 102 can be pressed against the first opposing part 31a of the first opposing wall 31 and a little finger 105 can be pressed against the second opposing part 31b. That is, a face against which the finger can be pressed is provided on both sides of the first lock piece 61 in the second direction Y. Thereby, the operator can stably hold the upper cover 3.

Furthermore, the tilted connection part 31c is provided on the first opposing wall 31 of the upper cover 3. The operator can hold the upper cover 3 by pressing a ring finger 104 against the connection part 31c. Therefore, with the electrical connection box 1 according to the embodiment, the operator can easily remove the upper cover 3 with one hand.

Furthermore, with the electrical connection box 1 according to the embodiment, the operator can easily hold the upper cover 3 when attaching the upper cover 3 to the box main body 2. Therefore, with the electrical connection box 1 according to the embodiment, it is possible to easily attach and remove the upper cover 3 to/from the box main body 2 with one hand.

As described above, the electrical connection box 1 according to the embodiment includes the box main body 2 and the upper cover 3. The box main body 2 includes the cylindrical sidewall 20 that surrounds the housing space 2x for accommodating the electric components, and the locking part 50 disposed on the outer face of the sidewall 20. The upper cover 3 is fitted to one end of the sidewall 20 and closes the first opening 2a of the sidewall 20. The sidewall 20 includes the first wall part 21 and the second wall part 22. The first wall part 21 and the second wall part 22 oppose to each other in the first direction X. The locking part 50 includes the first locking part 51 disposed on the first wall part 21, and the second locking part 52 disposed on the second wall part 22.

The upper cover 3 includes the first opposing wall 31, the first lock piece 61, the second opposing wall 32, and the second lock piece 62. The first opposing wall 31 oppose to the first wall part 21. The flexible first lock piece 61 is disposed on the outer face of the first opposing wall 31, and locked by the first locking part 51. The second opposing wall 32 opposes to the second wall part 22. The flexible second lock piece 62 is disposed on the outer face of the second opposing wall 32, and locked by the second locking part 52.

The first opposing wall 31 includes the first opposing part 31a, the second opposing part 31b, and the connection part 31c that connects the first opposing part 31a and the second opposing part 31b. The first opposing part 31a and the second opposing part 31b extend along the second direction Y that is orthogonal to the first direction X, and also neighboring to each other in the second direction Y. Furthermore, the second opposing part 31b is located closer to the second opposing wall 32 side than the first opposing part 31a is.

The first lock piece 61 is located at the end part 31d of the first opposing part 31a close to the second opposing part 31b. The first lock piece 61 is configured such that engagement with the first locking part 51 is released by being pressed toward the second opposing wall 32 side. The second lock piece 62 is configured such that engagement with the second locking part 52 is released by being pressed toward the first opposing wall 31 side.

With the electrical connection box 1 according to the embodiment, the operator can release the lock of the upper cover 3 by pressing the first lock piece 61 and the second lock piece 62 with the middle finger and the thumb of one hand. Furthermore, the operator can easily hold the upper cover 3 and remove the upper cover 3 from the box main body 2 by placing the index finger on the first opposing part 31a and placing the little finger on the second opposing part 31b. Thereby, the electrical connection box 1 according to the embodiment can improve the operability when removing the upper cover 3.

The connection part 31c according to the embodiment is a tilted face that is tilted with respect to the first direction X. In this case, the operator can stably hold the upper cover 3 by placing the ring finger on the connection part 31c.

The second lock piece 62 according to the embodiment is disposed on the second opposing wall 32 at a position opposing to the first opposing part 31a in the first direction X. With such layout, the operator can hold the upper cover 3 from both sides of the first direction X. As illustrated in FIG. 8, the operator can apply the pressing force F11 with the middle finger 103 and the pressing force F13 with the index finger 102 to the first opposing part 31a. The operator can stably hold the upper cover 3 by the pressing forces F11, F12, and F13.

The first lock piece 61 according to the embodiment is located between the second lock piece 62 and the connection part 31c in the second direction Y. That is, the position of the first lock piece 61 is shifted from the position of the second lock piece 62 in the second direction Y. With such layout, it becomes possible for the operator to easily place the thumb on the second lock piece 62 and the middle finger on the first lock piece 61 when holding the upper cover 3 with one hand.

The first opposing wall 31 according to the embodiment includes the protection walls 37 and 37 for protecting the first lock piece 61. The protection walls 37 and 37 are disposed one by one on both sides of the first lock piece 61 in the second direction Y. The second opposing wall 32 includes the protection walls 37 and 37 for protecting the second lock piece 62. The protection walls 37 and 37 are disposed one by one on both sides of the second lock piece 62 in the second direction Y. The protection walls 37 can protect the first lock piece 61 and the second lock piece 62 so that unintentional lock release will not occur in the first lock piece 61 and the second lock piece 62.

### Modification Example of Embodiment

A modification example of the embodiment will be described. The shapes of the box main body 2 and the upper cover 3 are not limited to those presented as examples. The electrical connection box 1 may be configured such that the operator can easily attach and remove the upper cover 3 with the left hand. In that case, the first opposing wall 31, the second opposing wall 32, the first lock piece 61, and the second lock piece 62 are designed such that the operator can hold the upper cover 3 by releasing the lock with each finger of the left hand. For example, the shape of the electrical connection box 1 may be in a shape that is horizontally flipped from the shape illustrated in FIG. 8 and the like.

The electrical connection box 1 need not include the lower cover 4. In that case, the shape of the box main body 2 may be formed in a cylindrical shape with a bottom.

The contents disclosed in the embodiment and the modification example described above may be executed while being combined as appropriate.

The cover of the electrical connection box according to the embodiment includes: the first opposing wall; the flexible first lock piece that is disposed on the outer face of the first opposing wall and locked by the first locking part; the second opposing wall; and the flexible second lock piece that is disposed on the outer face of the second opposing wall and locked by the second locking part. The first opposing wall includes the first opposing part, the second opposing part, and the connection part that connects the first opposing part and the second opposing part. The second opposing part is located closer to the second opposing wall side than the first opposing part is. The first lock piece is located at the end part of the first opposing part close to the second opposing part.

The operator can release the lock by pressing the middle finger against the first lock piece and pressing the thumb against the second lock piece. Furthermore, the operator can hold the cover by placing the index finger on the first opposing part and placing the little finger on the second opposing part. The electrical connection box according to the embodiment makes it possible to remove the cover easily with one hand, so that it is possible to improve the operability when removing the cover.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An electrical connection box (1) comprising:
a box main body (2) including a cylindrical sidewall (20) that surrounds a housing space (2x) for accommodating an electronic component, and a locking part (50) disposed on an outer face of the sidewall (20); and
a cover (3) that is fitted to one end of the sidewall (20) and closes an opening of the sidewall (20), wherein
the sidewall (20) includes a first wall part (21), and a second wall part (22) opposite the first wall part (21) in a first direction (X),
the locking part (50) includes a first locking part (51) disposed on the first wall part (21), and a second locking part (52) disposed on the second wall part (22),
the cover (3) includes a first opposing wall (31) opposite the first wall part (21), a flexible first lock piece (61) that is disposed on an outer face of the first opposing wall (31) and locked by the first locking part (51), a second opposing wall (32) opposite the second wall part (22), and a flexible second lock piece (62) that is disposed on an outer face of the second opposing wall (32) and locked by the second locking part (52),
the first opposing wall (31) includes a first opposing part (31a), a second opposing part (31b), and a connection part (31c) that connects the first opposing part (31a) and the second opposing part (31b),
the first opposing part (31a) and the second opposing part (31b) extend along a second direction (Y) that is orthogonal to the first direction (X), and also neighboring to each other in the second direction (Y),
the first lock piece (61) is configured such that engagement with the first locking part (51) is released by being pressed toward a side of the second opposing wall (32), and
the second lock piece (62) is configured such that engagement with the second locking part (52) is released by being pressed toward a side of the first opposing wall (31), **characterized in that**
the second opposing part (31b) is located closer to the second opposing wall (32) side than the first opposing part (31a) is,
the first lock piece (61) is located at an end part (31d) of the first opposing part (31a) close to the second opposing part (31b).

2. The electrical connection box (1) according to claim 1, wherein the connection part (31c) is a tilted face that is tilted with respect to the first direction (X).

3. The electrical connection box (1) according to claim 1 or 2, wherein
the second lock piece (62) is disposed on the second opposing wall (32) at a position opposite the first opposing part (31a) in the first direction (X).

4. The electrical connection box (1) according to claim 3, wherein
the first lock piece (61) is located between the second lock piece (62) and the connection part (31c) in the second direction (Y).

5. The electrical connection box (1) according to any one of claims 1 to 4, wherein
the first opposing wall (31) includes protection walls that are disposed on both sides of the first lock piece (61) in the second direction (Y) and configured to protect the first lock piece (61), and
the second opposing wall (32) includes protection walls that are disposed on both sides of the second lock piece (62) in the second direction (Y) and configured to protect the second lock piece (62).

## Patentansprüche

1. Ein elektrischer Anschlusskasten (1), umfassend:
einen Kastenhauptkörper (2), der eine zylindrische Seitenwand (20), die einen Aufnahmeraum (2x) zum Aufnehmen einer elektronischen Komponente umgibt, und einen Verriegelungsteil (50), der an einer Außenfläche der Seitenwand (20) angeordnet ist, enthält; und
eine Abdeckung (3), die auf ein Ende der Seitenwand (20) gepasst ist und eine Öffnung der Seitenwand (20) verschließt, wobei
die Seitenwand (20) einen ersten Wandteil (21) und einen zweiten Wandteil (22) enthält, der dem ersten Wandteil (21) in einer ersten Richtung (X) gegenüberliegt,
der Verriegelungsteil (50) einen ersten Verriegelungsteil (51), der an dem ersten Wandteil (21) angeordnet ist, und einen zweiten Verriegelungsteil (52), der an dem zweiten Wandteil (22) angeordnet ist, enthält,
die Abdeckung (3) eine erste gegenüberliegende Wand (31) gegenüber dem ersten Wandteil (21), ein flexibles erstes Verriegelungsstück (61), das auf einer Außenfläche der ersten gegenüberliegenden Wand (31) angeordnet und durch den ersten Verriegelungsteil (51) verriegelt ist, eine zweite gegenüberliegende Wand (32) gegenüber dem zweiten Wandteil (22) und ein flexibles zweites Verriegelungsstück (62) enthält, das auf einer Außenfläche der zweiten gegenüberliegenden Wand (32) angeordnet ist und durch den zweiten Verriegelungsteil (52) verriegelt ist,
die erste gegenüberliegende Wand (31) einen ersten gegenüberliegenden Teil (31a), einen zweiten gegenüberliegenden Teil (31b) und einen Verbindungsteil (31c) enthält, der den ersten gegenüberliegenden Teil (31a) und den zweiten gegenüberliegenden Teil (31b) verbindet,
der erste gegenüberliegende Teil (31a) und der zweite gegenüberliegende Teil (31b) sich entlang einer zweiten Richtung (Y) erstrecken, die orthogonal zu der ersten Richtung (X) ist, und auch in der zweiten Richtung (Y) einander benachbart sind,
das erste Verriegelungsstück (61) so konfiguriert ist, dass der Eingriff mit dem ersten Verriegelungsteil (51) gelöst wird, indem es in Richtung einer Seite der zweiten gegenüberliegenden Wand (32) gedrückt wird, und
das zweite Verriegelungsstück (62) so konfiguriert ist, dass der Eingriff mit dem zweiten Verriegelungsteil (52) gelöst wird, indem es in Richtung einer Seite der ersten gegenüberliegenden Wand (31) gedrückt wird, **dadurch gekennzeichnet, dass**
der zweite gegenüberliegende Teil (31b) näher zu der Seite der zweiten gegenüberliegenden Wand (32) angeordnet ist als der erste gegenüberliegende Teil (31a),
das erste Verriegelungsstück (61) an einem Endteil (31d) des ersten gegenüberliegenden Teils (31a) nahe dem zweiten gegenüberliegenden Teil (31b) angeordnet ist.

2. Der elektrische Anschlusskasten (1) nach Anspruch 1, wobei der Verbindungsteil (31c) eine geneigte Fläche ist, die in Bezug auf die erste Richtung (X) geneigt ist.

3. Der elektrische Anschlusskasten (1) nach Anspruch 1 oder 2, wobei das zweite Verriegelungsstück (62) an der zweiten gegenüberliegenden Wand (32) an einer dem ersten gegenüberliegenden Teil (31a) in der ersten Richtung (X) gegenüberliegenden Position angeordnet ist.

4. Der elektrische Anschlusskasten (1) nach Anspruch 3, wobei das erste Verriegelungsstück (61) zwischen dem zweiten Verriegelungsstück (62) und dem Verbindungsteil (31c) in der zweiten Richtung (Y) angeordnet ist.

5. Der elektrische Anschlusskasten (1) nach einem der Ansprüche 1 bis 4, wobei
die erste gegenüberliegende Wand (31) Schutzwände enthält, die auf beiden Seiten des ersten Verriegelungsstücks (61) in der zweiten Richtung (Y) angeordnet sind und konfiguriert sind, das erste Verriegelungsstück (61) zu schützen, und
die zweite gegenüberliegende Wand (32) Schutzwände enthält, die auf beiden Seiten des zweiten Verriegelungsstücks (62) in der zweiten Richtung (Y) angeordnet sind und konfiguriert sind, das zweite Verriegelungsstück (62) zu schützen.

## Revendications

1. Boîtier de connexion électrique (1) comprenant :
un corps principal de boîtier (2) incluant une paroi latérale cylindrique (20) qui entoure un espace d'accueil (2x) pour accueillir un composant électronique, et une partie de verrouillage (50) disposée sur une face extérieure de la paroi latérale (20) ; et
un couvercle (3) qui est fixé sur une extrémité de la paroi latérale (20) et ferme une ouverture de la paroi latérale (20), dans lequel
la paroi latérale (20) inclut une premier partie de paroi (21), et une deuxième partie de paroi (22) opposée à la première partie de paroi (21) dans une première direction (X),
la partie de verrouillage (50) inclut une première partie de verrouillage (51) disposée sur la première partie de paroi (21), et une deuxième partie de verrouillage (52) disposée sur la deuxième partie de paroi (22),
le couvercle (3) inclut une première paroi opposée (31) opposée à la première partie de paroi (21), une première pièce de verrou flexible (61) qui est disposée sur une face extérieure de la première paroi opposée (31) et verrouillée par la première partie de verrouillage (51), une deuxième paroi opposée (32) à la deuxième partie de paroi (22), et une deuxième pièce de verrou flexible (62) qui est disposée sur une face extérieure de la deuxième paroi opposée (32) et verrouillée par la deuxième partie de verrouillage (52),
la première paroi opposée (31) inclut une première partie opposée (31a), une deuxième partie opposée (31b), et une partie de connexion (31c) qui connecte la première partie opposée (31a) et la deuxième partie opposée (31b),
la première partie opposée (31a) et la deuxième partie opposée (31b) s'étendent dans une deuxième direction (Y) qui est orthogonale à la première direction (X), et sont en outre voisines l'une de l'autre dans la deuxième direction (Y),
la première pièce de verrou (61) est configurée de sorte qu'une solidarisation avec la première partie de verrouillage (51) soit libérée par une pression vers un côté de la deuxième paroi opposée (32), et
la deuxième pièce de verrou (62) est configurée de sorte qu'une solidarisation avec la deuxième partie de verrouillage (52) soit libérée par une pression vers un côté de la première paroi opposée (31), **caractérisé en ce que**
la deuxième partie opposée (31b) est située plus près du côté de deuxième paroi opposée (32) que ne l'est la première partie opposée (31a),
la première pièce de verrou (61) est située sur une partie d'extrémité (31d) de la première partie opposée (31a) à proximité de la deuxième partie opposée (31b).

2. Le boîtier de connexion électrique (1) selon la revendication 1, dans lequel la partie de connexion (31c) est une face inclinée qui est inclinée par rapport à la première direction (X).

3. Le boîtier de connexion électrique (1) selon la revendication 1 ou 2, dans lequel
la deuxième pièce de verrou (62) est disposée sur la deuxième paroi opposée (32) à un emplacement opposé à la première partie opposée (31a) dans la première direction (X) .

4. Le boîtier de connexion électrique (1) selon la revendication 3, dans lequel
la première pièce de verrou (61) est située entre la deuxième pièce de verrou (62) et la partie de connexion (31c) dans la deuxième direction (Y).

5. Le boîtier de connexion électrique (1) selon l'une quelconque des revendications 1 à 4, dans lequel
la première paroi opposée (31) inclut des parois de protection qui sont disposées sur les deux côtés de la première pièce de verrou (61) dans la deuxième direction (Y) et configurées pour protéger la première pièce de verrou (61), et
la deuxième paroi opposée (32) inclut des parois de protection qui sont disposées sur les deux côtés de la deuxième pièce de verrou (62) dans deuxième direction (Y) et configurées pour protéger la deuxième pièce de verrou (62).
